# EUROPÄISCHE PATENTANMELDUNG

(11) **EP 1 118 509 A2**
(43) Veröffentlichungstag der Anmeldung: **25.07.2001**
(21) Anmeldenummer: 01100140.1
(22) Anmeldetag: 15.01.2001
(51) Int. Cl.: B60R 21/20

(54) **Gassack-Modul, dessen Aktivierung, belastet mit einem mit konzentrischen Nieten befestigtem Gewebematerialstück**

(30) Priorität: 21.01.2000 DE 20004076 U
(71) Anmelder: TRW Automotive Safety Systems GmbH & Co. KG, 63743 Aschaffenburg (DE)
(72) Erfinder: Derrick, John-Oliver, 97265 Hettstadt (DE); Phon, Dao-Xuan, 63067 Offenbach (DE)
(74) Vertreter: Kitzhofer, Thomas, Dipl.-Ing.

(57) **Zusammenfassung**

Die Erfindung betrifft ein Gassack-Modul, mit wenigstens einem Halterungsteil (16), wenigstens einem Gewebematerialstück, das bei Aktivierung des Gassack-Moduls belastet wird, und einer kraftübertragenden Einrichtung, mit der das Gewebematerialstück am Halterungsteil (16) befestigt ist. Das Gassack-Modul ist dadurch gekennzeichnet, daß die Einrichtung einen eine Öffnung in dem Gewebematerialstück verstärkenden ersten Niet (32) und einen, den ersten Niet (32) durchdringenden und das Gewebematerialstück mit dem Halterungsteil (16) verbindenden zweiten Niet (36) umfaßt.

## Beschreibung

Die Erfindung betrifft ein Gassack-Modul mit wenigstens einem Halterungsteil, wenigstens einem Gewebematerialstück, das bei Aktivierung des Gassack-Moduls belastet wird, und einer kraftübertragenden Einrichtung, mit der das Gewebematerialstück am Halterungsteil befestigt ist.

Bei herkömmlichen Gassack-Modulen müssen Fangbänder oder der Gassack selbst sehr sicher und damit aufwendig am Halterungsteil befestigt sein, damit sie beim Aktivieren des Gassack-Moduls, beim dem sie auf Zug belastet werden, nicht aus ihrer Verankerung gelöst werden. Dieses Lösen aus der Verankerung kann beispielsweise durch Ausreißen des Gewebestücks, also des Fangbands oder des Gassacks, erfolgen.

Die Erfindung schafft ein Gassack-Modul, bei dem das Gewebematerialstück sicherer am Halterungsteil befestigt ist und im übrigen auch einfacher im Gassack-Modul montiert werden kann. Dies wird bei einem Gassack-Modul der eingangs genannten Art dadurch erreicht, daß die Einrichtung einen eine Öffnung in dem Gewebematerialstück verstärkenden ersten Niet und einen, den ersten Niet durchdringenden und das Gewebematerialstück mit dem Halterungsteil verbindenden zweiten Niet umfaßt. Bei dem erfindungsgemäßen Gassack-Modul wird das Gewebestück durch den ersten Niet einerseits verstärkt, so daß ein Ausreißen nicht mehr so leicht möglich ist, und andererseits kann der zweite Niet, der der eigentlichen Befestigung des Gewebematerialstücks am Halterungsteil dient, leichter montiert werden. Der letztgenannte Vorteil ergibt sich daraus, daß bislang stets der Niet durch das labile Gewebematerialstück und das Halterungsteil gesteckt werden mußte, was bei der oft schweren Zugänglichkeit der entsprechenden Öffnungen am Halterungsteil schwer möglich war. Beim erfindungsgemäßen Gassack-Modul hingegen dient der erste Niet gleichzeitig als Führung für den zweiten Niet, der sehr einfach durch den ersten Niet gesteckt werden kann.

Das Gewebematerialstück ist vorzugsweise ein Gassack oder ein Fangband.

Bei der bevorzugten Ausführungsform verbindet der erste Niet ein Kunststoffteil mit dem Gewebematerialstück zur Bildung einer Einheit. Diese Einheit wird dann durch den zweiten Niet am Halterungsteil befestigt. Die Befestigung von Gewebematerialstück und Kunststoffteil mußte bislang erst bei der Befestigung dieser Teile am Halterungsteil erfolgen, was oft sehr schwierig ist, denn das Kunststoffteil wird üblicherweise mit Öffnungen versehen, die ein Untermaß gegenüber dem Niet haben, so daß es in befestigtem Zustand auf keinen Fall Spiel hat. Dies jedoch macht, wie gesagt, die Montage des Niets schwieriger. Bei der bevorzugten Ausführungsform hingegen ist bereits der erste Niet durch das Kunststoffteil und das labile Gewebematerialstück geführt, so daß der zweite Niet leicht durch den ersten Niet geführt werden kann, bevor er umgeformt wird.

Das Kunststoffteil ist üblicherweise eine Gassack-Abdeckung, die einen Teil des Gassack-Moduls bildet.

Zur besseren Befestigung des Gewebematerialstücks am Kunststoffteil wird darüber hinaus vorgesehen, daß das Gewebematerialstück am Rand des Kunststoffteils um diesen herum umgeschlagen wird und damit den Rand umschließt. Der erste Niet erstreckt sich durch das Gewebematerialstück an beiden entgegengesetzten Seiten des Kunststoffteils und durch das Kunststoffteil selbst.

Eine andere Ausführungsform der Erfindung sieht vor, daß das Gewebematerialstück ein Gassack ist, der im Bereich seines Einblasmundes am Halterungsteil befestigt ist.

Weitere Merkmale und Vorteile der Erfindung ergeben sich aus der nachfolgenden Beschreibung und aus den nachfolgenden Zeichnungen, auf die Bezug genommen wird. In den Zeichungen zeigen:
Fig. 1 eine Querschnittsansicht durch eine Ausführungsform des erfindungsgemäßen Gassack-Moduls,
Fig. 2 eine vergrößerte Ansicht des mit X bezeichneten, mit einem Kreis umgebenen Bereiches in Fig 1, der die Befestigung des Gassacks am Generatorträger zeigt,
Fig. 3 eine zweite Ausführungsform des erfindungsgemäßen Gassack-Moduls, bei der nur die linke Hälfte des Moduls dargestellt ist.

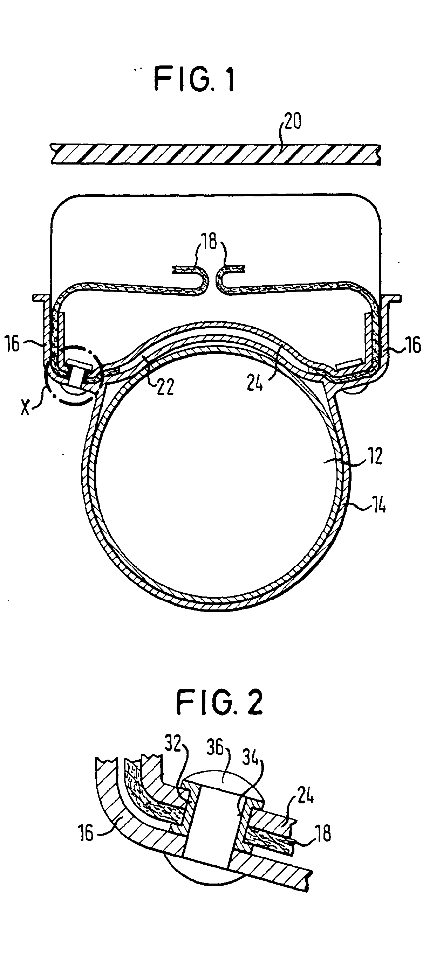

In Fig. 1 ist ein Gassack-Modul dargestellt, das einen Gasgenerator 12, ein Aufnahmegehäuse 14 mit einem Halterungsteil 16 in Form eines einstückig angeformten, umlaufenden Flansches und einen Gassack 18 sowie eine Modulabdeckung 20 aufweist. Die Abdeckung 20 ist nur abschnittsweise dargestellt.

Der Gassack 18 hat einen Einblasmund 22, über den das Gas, welches im Gasgenerator 12 erzeugt wird, eingeblasen wird. Der Gassack bildet ein Gewebematerialstück, welches durch ein in den Gassack eingelegtes Halteblech 24 gegen das Halterungsteil 16 geklemmt wird. Diese Klemmung wird durch eine Einrichtung erreicht. Die entsprechende Befestigungseinrichtung ist in Fig. 2 vergrößert dargestellt und wird anhand dieser Figur näher erläutert. Der Gassack 18 ist mit dem Klemmblech 24 zu einer Einheit verbunden, was durch einen ersten, hohlen Niet 32 erfolgt, der im gesetzten Zustand eine Öffnung im Gassack 18 und im Halteblech 24 durchdringt. Die Innenseite des Niets definiert eine Durchgangsöffnung 34. Die dann vormontierte Einheit kann separat transportiert werden, ohne daß die Gefahr besteht, daß sich das Halteblech 24 gegenüber dem Gassack 18 verschiebt. Bei der Montage der gebildeten Einheit am Halterungsteil 16 wird ein zweiter Niet 36, der einen Durchgangsniet darstellt, durch den ersten Niet 32 gesteckt und anschließend gesetzt, d.h. wenigstens an einem Ende umgeformt. Der erste Niet 32 dient als Führung für den Niet 36 beim Einführen des noch ungesetzten Niets 36. Der Verlauf nach dem Öffnen der Abdeckung 20 und Entfalten des Gassacks im Bereich der Befestigung des Gassacks am Halterungsteil 16 wird durch diese Anordnung der Niete 32, 36 deutlich verbessert, und ein Ausreißen des Gassacks wird erschwert.

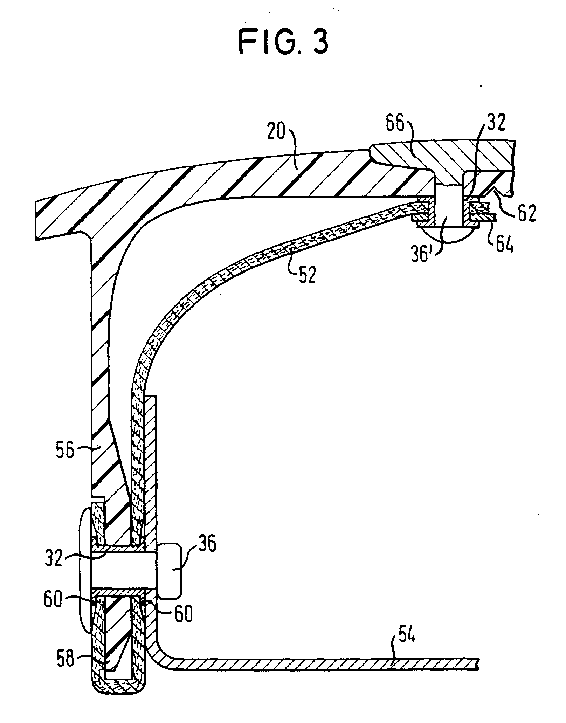

Bei der zweiten Ausführungsform, die in Fig. 3 dargestellt ist, ist das Gewebematerial, welches mit der bereits im Zusammenhang mit Fig. 2 erläuterten Einrichtung befestigt wird, ein Fangband 52. Das Fangband 52 ist über den Niet 32 zur Bildung einer Einheit an eine Seitenwand 56 der Abdeckung 20, die ein Kunststoff bildet, angebracht, so daß Seitenwand 56 und Fangband 52 eine vormontierte Einheit bilden. Das Fangband 52 ist im übrigen im Bereich des unteren Randes 58 der Seitenwand um diesen herumgelegt, indem es umgeschlagen ist, so daß es an entgegengesetzten Seiten der Seitenwand 56 anliegt. Der Niet 32 greift mit seinen äußeren, radial nach außen umgeformten Bereichen 60 an den Außenseiten des Fangbands 52 an.

Das andere Ende des Fangbands 52 ist im Bereich einer in die Vorderwand der Abdeckung 20 eingeformten Aufreißlinie 62 mit der Abdeckung 20 verbunden, wobei diese Verbindung ebenfalls durch die bereits beschriebene Einrichtung zur Befestigung des Gewebestücks, hier des Fangbands 52 erfolgen kann. Das Fangband 52 ist an diesem Ende mit einem Halterungsblech 64 mittels des Niets 32 zur Bildung einer Einheit verbunden. Der erste Niet ist hingegen einstückig an ein Emblem 66 (hier Halterungsteil) angeformt.

Das Emblem 66 wird durch eine entsprechende Öffnung in der Abdeckung 20 gesteckt. Anschließend wird auf den rückseitigen, ersten Niet 56' die Einheit aus Fangband 52 und Halterungsblech 64 gesteckt. Schließlich wird der Niet 56' am rückseitigen Ende umgeformt.

Die Einrichtung zur Befestigung des Fangbandes wird beim Öffnen der Abdeckung 20, wenn diese im Bereich der Aufreißlinie 62 aufbricht, stark mechanisch belastet, da das Fangband 52 die Bewegung des sich öffnenden Teils der Abdeckung 20 begrenzen soll und ein Lösen des Emblems 66 verhindern muß.

## Patentansprüche

1. Gassack-Modul, mit
wenigstens einem Halterungsteil (16; 54),
wenigstens einem Gewebematerialstück, das bei Aktivierung des Gassack-Moduls belastet wird, und
einer kraftübertragenden Einrichtung, mit der das Gewebematerialstück am Halterungsteil (16; 54) befestigt ist,
dadurch gekennzeichnet, daß
die Einrichtung einen eine Öffnung in dem Gewebematerialstück verstärkenden ersten Niet (32) und einen, den ersten Niet (32) durchdringenden und das Gewebematerialstück mit dem Halterungsteil (16; 54) verbindenden zweiten Niet (36; 36') umfaßt.

2. Gassack-Modul nach Anspruch 1, dadurch gekennzeichnet, daß das Gewebematerialstück ein Gassack (18) oder ein Fangband (52) ist.

3. Gassack-Modul nach Anspruch 1 oder 2, dadurch gekennzeichnet, daß das Halterungsteil ein Emblem (66) ist.

4. Gassack-Modul nach einem der vorhergehenden Ansprüche, dadurch gekennzeichnet, daß das Gewebematerialstück durch den ersten Niet (32) an einem separaten, angrenzenden Teil (24; 56; 64) zur Bildung einer Einheit befestigt ist und daß diese Einheit durch den zweiten Niet (36; 36') am Halterungsteil (16; 54) befestigt ist.

5. Gassack-Modul nach Anspruch 4, dadurch gekennzeichnet, daß das Teil, mit dem das Gewebematerialstück eine Einheit bildet, aus Kunststoff ist.

6. Gassack-Modul nach Anspruch 5, dadurch gekennzeichnet, daß das Teil aus Kunststoff die Abdeckung (20) des Gassack-Moduls ist.

7. Gassack-Modul nach einem der Ansprüche 4 bis 6, dadurch gekennzeichnet, daß das Gewebematerialstück am Rand (58) des Teils um diesen Rand herum umgeschlagen ist und das Teil auf entgegengesetzten Seiten umgibt und daß der erste Niet (32) den umgeschlagenen Abschnitt des Gewebematerialstücks und das Teil zur Bildung einer Einheit zusammenhält.

8. Gassack-Modul nach einem der vorhergehenden Ansprüche, dadurch gekennzeichnet, daß das Gewebematerialstück ein Gassack (18) ist, der im Bereich seines Einblasmundes (22) am Halterungsteil (16) befestigt ist.
